# EUROPÄISCHE PATENTANMELDUNG

(11) **EP 2 468 473 A1**
(43) Veröffentlichungstag der Anmeldung: **27.06.2012**
(21) Anmeldenummer: 11010100.3
(22) Anmeldetag: 22.12.2011
(51) Int. Cl.: B29C 45/14, B29K 105/20, B62D 29/00

(54) **Verfahren zur Herstellung eines Verbundbauteils und Verbundbauteil**

(30) Priorität: 23.12.2010 DE 102010055824
(71) Anmelder: REHAU AG + Co, 95111 Rehau (DE); fischer Hydroforming GmbH, 58706 Menden (DE)
(72) Erfinder: Michel, Peter, 95028 Hof (DE); Löffler, Andreas, 95111 Rehau (DE); Ostermann, Theodor, 58708 Menden (DE); Junge, Thorsten, 57482 Wenden (DE); Juraschek, Peter, 09112 Chemnitz (DE); Geissler, Stefan, 59394 Nordkirchen (DE)

(57) **Zusammenfassung**

Die Erfindung betrifft ein Verfahren zur Herstellung eines Verbundbauteils (10), das durch einen Profilhohlkörper (12) verstärkt ist, wobei das Verfahren die folgenden Schritte umfasst:
(a) Bereitstellen eines Profilhohlkörpers (12),
(b) Einbringen des Profilhohlkörpers (12) in eine Kavität (16) eines Spritzgusswerkzeugs (14),
(c) Formen des Verbundbauteils (10) durch Einspritzen von Kunststoffmaterial in die Kavität (16), wobei der Profilhohlkörper (12) während des Einspritzens durch ein Verstärkungsmedium (26) im Innenvolumen (24) des Profihohlkörpers (12) gestützt wird, und
(d) Aushärten des eingespritzten Kunststoffmaterials.

Die Erfindung betrifft ferner ein nach diesem Verfahren herstellbares Verbundbauteil.

## Beschreibung

### Hintergrund der Erfindung

Die vorliegende Erfindung betrifft ein Verfahren zur Herstellung eines Verbundbauteils, das durch einen Profilhohlkörper verstärkt ist, und ein nach diesem Verfahren herstellbares Verbundbauteil.

Insbesondere im Automobilbereich gibt es Verbundbauteile bzw. Hybridbauteile, welche durch einen Profilhohlkörper, der meist aus einem metallischen Material besteht, verstärkt sind. Es ist auch bekannt, Frontendträger aus Polyamid zur Verstärkung mit Blecheinlegern oder sog. IHU-Profilen zu versehen, wobei letztere durch die bekannte Innenhochdruck-Umformung (Abk. IHU) geformte Profile sind, welche lokale Öffnungen aufweisen können, um Durchspritzungen bei der Herstellung des jeweiligen Verbundbauteils zu realisieren. Bei den bekannten Verfahren zur Herstellung der Verbundbauteile wird der Profilhohlkörper - nachdem er in eine formgebende Kavität eines Spritzgusswerkzeugs gelegt worden ist - von fließfähigem Kunststoffmaterial umspritzt. Infolge des beim Einspritzen des Kunststoffmaterials bzw. der Kunststoffschmelze entstehenden Schmelzedrucks bzw. Kunststoffmaterial-Drucks ist es erforderlich, dass die Wandung der zur Verstärkung vorgesehenen Profilhohlkörper eine bestimmte Mindeststärke bzw. Mindestdicke aufweist, damit sich der Profilhohlkörper infolge des beim Spritzgießen entstehenden Schmelzedrucks bzw. Kunststoffmaterial-Drucks nicht deformiert bzw. verformt. Das Vorsehen einer bestimmten Mindeststärke bzw. Mindestdicke des Profihohlkörpers hat zur Folge, dass ein bestimmtes Gewicht des Profilhohlkörpers nicht unterschritten werden darf, um eine durch das Herstellungsverfahren verursachte Verformung bzw. Deformation des Profilhohlkörpers zu vermeiden.

### Zugrundeliegende Aufgabe

Der vorliegenden Erfindung liegt die Aufgabe zugrunde, ein Verfahren zur Herstellung eines durch einen Profilhohlkörper verstärkten Verbundbauteils und ein durch dieses Verfahren herstellbares Verbundbauteil anzugeben, wobei bei dem Verfahren der Profilhohlkörper im Vergleich zu Profilhohlkörpern bekannter Verbundbauteile wesentlich dünnwandiger ausgebildet sein kann ohne dass bei der Herstellung eine Deformation oder Verformung des Profilhohlkörpers auftritt.

### Erfindungsgemäße Lösung

Diese Aufgabe wird erfindungsgemäß mit einem Verfahren zur Herstellung eines Verbundbauteils mit den Merkmalen des Anspruchs 1 und mit einem Verbundbauteil mit den Merkmalen des Anspruchs 15 gelöst.

Das erfindungsgemäße Verfahren zur Herstellung eines Verbundbauteils, das durch einen Profilhohlkörper verstärkt ist, umfasst die folgenden Schritte:
(a) Bereitstellen eines Profilhohlkörpers,
(b) Einbringen des Profilhohlkörpers in eine Kavität eines Spritzgusswerkzeugs,
(c) Formen des Verbundbauteils durch Einspritzen von Kunststoffmaterial in die Kavität, wobei der Profilhohlkörper während des Einspritzens durch ein Verstärkungsmedium im Innenvolumen des Profihohlkörpers gestützt wird, und
(d) Aushärten des eingespritzten Kunststoffmaterials.

In Schritt (c) des erfindungsgemäßen Verfahrens wird der Profilhohlkörper während des Einspritzens durch ein Verstärkungsmedium im Innenvolumen des Profihohlkörpers bzw. im Inneren des Profilhohlkörpers gestützt.

Durch Vorsehen des Verstärkungsmediums kann während des Einspritzens des Kunststoffmaterials, welches bevorzugt ein Thermoplast ist, eine Deformation bzw. Verformung des Profilhohlkörpers infolge eines in der Kavität auf den Profilhohlkörper einwirkenden Drucks des fließfähigen Kunststoffmaterials bzw. der Kunststoffmaterialschmelze vermieden werden. Dies hat den Vorteil, dass zur Herstellung des Verbundbauteils in Schritt (a) des erfindungsgemäßen Verfahrens ein Profilhohlkörper bereitgestellt werden kann, der im Vergleich zu Profilhohlkörpern bekannter Verbundbauteile wesentlich dünnwandiger ausgebildet sein kann ohne, dass bei der Herstellung eine Deformation oder Verformung des Profilhohlkörpers auftreten kann oder dass ein lokales Öffnen des Profilhohlkörpers erforderlich wäre.

Die gegenüber bekannten Verbundbauteilen wesentlich dünnwandigere Ausbildung des Profilhohlkörpers hat zur Folge, dass die Verbundbauteile im Unterschied zu vergleichbaren bekannten Lösungen ein wesentlich geringeres Gewicht aufweisen. Diese Reduzierung des Gewichts ist insbesondere bei Verbundbauteilen bzw. Hybridbauteilen, die als Bauteil eines Kraftfahrzeugs verwendet werden - wie z. B. ein Verbundbauteil in Form eines Biegeträgers - von Vorteil, da mit der Gewichtsreduzierung insbesondere auch der Treibstoffverbrauch reduziert oder die Achslastverteilung optimiert werden kann. Ferner wird durch das Vorsehen eines Profilhohlkörpers ein Verbundbauteil mit einer hohen Festigkeit und einer hohen Steifigkeit, insbesondere einer hohen Torsionssteifigkeit bereitgestellt, und zwar bei gleichzeitig hoher Gestaltungsfreiheit bei der Gestaltung bzw. Formung des Verbundbauteils.

Als Verstärkungsmedium wird besonders bevorzugt ein inkompressibles Fluid verwendet. Das Innenvolumen kann zur Verstärkung des Profilhohlkörpers mit dem inkompressiblen Fluid aufgefüllt bzw. gefüllt werden, so dass es also vollständig bzw. zumindest im wesentlichen vollständig mit dem inkompressiblen Fluid gefüllt ist. Kompressible Anteile, insbesondere Luft, werden durch das Füllen des Innenvolumens bzw. des Inneren des Profilhohlkörpers mit dem inkompressiblen Fluid vollständig bzw. nahezu vollständig entfernt, so dass eine Deformation bzw. Verformung des Profilhohlkörpers während des Einspritzens infolge des in der Kavität auf den Profilhohlkörper einwirkenden Drucks des fließfähigen Kunststoffmaterials bzw. der Kunststoffmaterialschmelze sehr wirksam vermieden werden kann. Das inkompressible Fluid ist vorzugsweise Wasser, welches kostengünstig üblichen Wasserversorgungsleitungen entnommen werden kann.

Der in Schritt (a) bereitgestellte Profilhohlkörper weist vorzugsweise eine Wandung mit einer maximalen Wandstärke auf, die innerhalb eines Bereichs von 0,3 mm bis 3 mm liegt. Der Profilhohlkörper besteht vorzugsweise aus einem metallischen Material, wobei das metallische Material vorzugsweise Aluminium oder Stahl, weiter vorzugsweise rostfreier Stahl oder Titan ist oder umfasst. Der Profilhohlkörper kann jedoch auch aus einem organischen Material bestehen - beispielsweise aus faserverstärktem Kunststoffmaterial.

Der in Schritt (a) bereitgestellte Profilhohlkörper kann einen in Längsrichtung des Profilhohlkörpers variierenden Außenumfang aufweisen. Der Außenumfang kann dabei gestuft, kontinuierlich, diskontinuierlich oder in einer Kombination der vorgenannten Möglichkeiten variieren.

Der in Schritt (a) bereitgestellte Profilhohlkörper kann eine in Längsrichtung des Profilhohlkörpers variierende Querschnittsgeometrie aufweisen. Die Querschnittsgeometrie kann dabei kreisförmig, rechteckig, vieleckig, dreieckig, elliptisch oder in einer Kombination der vorgenannten Möglichkeiten variieren.

Da, wie oben dargelegt, eine Deformation bzw. Verformung des Profilhohlkörpers während des Einspritzens - infolge des in der Kavität auf den Profilhohlkörper einwirkenden Drucks des fließfähigen Kunststoffmaterials bzw. der Kunststoffmaterialschmelze - bei der Herstellung mittels des erfindungsgemäßen Verfahrens sehr wirksam vermieden werden kann, ist es möglich Verbundbauteile mit Profilhohlkörpern herzustellen, welche die obigen geringen maximalen Wandstärken aufweisen, einhergehend mit einer wesentlichen Reduzierung des Gewichts im Vergleich zu bekannten Lösungen.

Bei einer praktischen Ausführungsform des erfindungsgemäßen Verfahrens wird vor Schritt (b) das Innenvolumen des Profilhohlkörpers mit dem Verstärkungsmedium aufgefüllt, das Innenvolumen anschließend verschlossen, und das Verstärkungsmedium nach Schritt (d) aus dem Innenvolumen entfernt. Bei dieser praktischen Ausführungsform wird das Innenvolumen vorzugsweise durch wenigstens einen Stopfen verschlossen, und der Profilhohlkörper wird in Schritt (b) mit dem Stopfen in die Kavität eingebracht, wobei über den Stopfen ein sich beim Einspritzen des Kunststoffmaterials in der Kavität aufbauender Druck auf das Verstärkungsmedium im Innenvolumen übertragbar ist.

Dadurch, dass das Innenvolumen des Profilhohlkörpers vor dem Einbringen des Profilhohlkörpers in die Kavität des Spritzgusswerkzeugs mit dem Verstärkungsmedium aufgefüllt und auch vor diesem Einbringen das Innenvolumen anschließend verschlossen wird, wird der Profilhohlkörper bereits außerhalb der Kavität auf das Formen gemäß Schritt (c) des erfindungsgemäßen Verfahrens vorbereitet. Bei dieser praktischen Ausführungsform ist das Verstärkungsmedium vorzugsweise ein inkompressibles Fluid, insbesondere Wasser, welches nach dem Aushärten in Schritt (d) aus dem Innenvolumen entfernt wird und welches, wie bereits oben dargelegt, infolge der Verdrängung kompressibler Anteile durch das Füllen bzw. Auffüllen des Innenvolumens mit dem inkompressiblen Fluid Deformationen bzw. Verformungen des Profilhohlkörpers während des Formens gemäß Schritt (c) des erfindungsgemäßen Verfahrens wirksam vermeidet.

Das Innenvolumen wird bei dieser praktischen Ausführungsform vorzugsweise durch wenigstens einen Stopfen verschlossen, und der Profilhohlkörper wird in Schritt (b) mit dem Stopfen in die Kavität eingebracht, wobei über den Stopfen ein sich beim Einspritzen des Kunststoffmaterials in der Kavität aufbauender Druck auf das Verstärkungsmedium im Innenvolumen übertragbar ist.

Durch die über den wenigstens einen Stopfen ermöglichte Druckübertragung des sich in der Kavität aufbauenden Drucks - also insbesondere des Drucks des eingespritzten fließfähigen Kunststoffmaterials bzw. der eingespritzten Kunststoffmaterialschmelze - auf das insbesondere in Form eines inkompressiblen Fluids ausgebildete Verstärkungsmedium können trotz sorgfältigen Auffüllens des Innenvolumens mit dem Fluid noch bestehende kompressible Anteile bzw. Medien im Fluid, also insbesondere Lufteinschlüsse bzw. Luftblasen durch die Druckübertagung in ihrer Größe soweit reduziert werden, dass von diesen keine oder keine wesentliche deformierende oder verformende Wirkung auf den Profilhohlkörper während des Formens in Schritt (c) ausgehen kann.

Bei einer weiteren praktischen Ausführungsform des erfindungsgemäßen Verfahrens wird nach Schritt (b) und vor Schritt (c) das Innenvolumen des Profilhohlkörpers mit dem Verstärkungsmedium aufgefüllt und das Verstärkungsmedium wird nach Schritt (d) aus dem Innenvolumen entfernt, wobei auch bei dieser weiteren praktischen Ausführungsform das Verstärkungsmedium besonders bevorzugt ein inkompressibles Fluid, insbesondere Wasser ist.

Die Auffüllung des Innenvolumens erfolgt bei dieser weiteren praktischen Ausführungsform also nachdem der Profilhohlkörper in die Kavität des Spritzgusswerkzeugs eingebracht wurde, was insbesondere für die Herstellung einer Vielzahl baugleicher Verbundbauteile von Vorteil ist, insbesondere weil das Auffüllen in der Kavität erflogt und daher die für das Füllen bereitzustellende Prozesszeit sehr kurz eingerichtet werden kann. Das Fluid kann bei dieser weiteren praktischen Ausführungsform z.B. auf praktische Weise über wenigstens einen Zuführkanal des Spritzgusswerkzeugs, der sich bis zu dem Inneren bzw. dem Innenvolumen des Profilhohlkörpers erstreckt, dem Innenvolumen zugeführt werden.

Bevorzugt wird das Verstärkungsmedium durch Einbringen von Luft aus dem Innenvolumen verdrängt, so dass also eine Entfernung des Verstärkungsmediums aus dem Innenvolumen durch Verdrängen mittels eingebachter Luft erfolgt. Luft als Verdrängungsmedium, insbesondere in Form von Druckluft, kann auf praktische Weise von üblichen Kompressoren oder Druckbehälter bereitgestellt werden.

Bei einer bevorzugten Ausführungsform des erfindungsgemäßen Verfahrens wird als Verstärkungsmedium ein Teil des eingespritzten Kunststoffmaterials verwendet, wobei das Innenvolumen des Profilhohlkörpers mit diesem Kunststoffmaterial während des Formens des Verbundbauteils in Schritt (c) vollgespritzt wird.

Gemäß dieser bevorzugten Ausführungsform dient das in das Innenvolumen eingespritzte Kunststoffmaterial als Verstärkungsmedium welches während des Formens bzw. Spritzgie-βens des Verbundbauteils in das Innenvolumen bzw. das Innere des Profihohlkörpers gespritzt wird. Auch mittels dieser bevorzugten Ausführungsform kann wirksam eine Deformation oder Verformung des Profilhohlkörpers während des Formens in Schritt (c) vermieden werden. Dadurch, dass das fließfähige Kunststoffmaterial während des Formens auch in das Innenvolumen bzw. das Innere des Profilhohlkörpers eingespritzt wird, bauen sich in dem Innenvolumen und in dem Bereich der Kavität in Umgebung des Profilhohlkörpers im wesentlichen gleich große Drücke auf, einhergehend mit einer wirksamen Vermeidung einer Deformation oder Verformung des Profilhohlkörpers.

Bevorzugt wird bei dieser bevorzugten Ausführungsform das in das Innenvolumen eingespritzte Kunststoffmaterial nach Schritt (c) aus dem Innenvolumen entfernt, so dass in Schritt (d) des erfindungsgemäßen Verfahrens nur das den Profilhohlkörper umgebende und die Form des Verbundbauteils ausbildende Kunststoffmaterial ausgehärtet wird.

Das Entfernen des eingespritzten Kunststoffmaterials ist insbesondere von Vorteil, wenn im Querschnitt des Profilhohlkörpers die Querschnittsfläche des Innenvolumens vergleichsweise groß ist, also insbesondere größer ist als 15 bis 400 mm², so dass die Entfernung des Kunststoffmaterials dazu dient, ein möglichst leichtes Verbundbauteil bereitzustellen.

Das in das Innenvolumen eingespritzte Kunststoffmaterial kann in dem Innenvolumen auch verbleiben und ausgehärtet werden. Dies ist von Vorteil, wenn im Querschnitt des Profilhohlkörpers die Querschnittsfläche des Innenvolumens vergleichsweise klein ist, also insbesondere kleiner ist als 1 bis 15 mm². Bei diesen Querschnittsflächen fällt die durch das in dem Innenvolumen verbleibende Kunststoffmaterial bewirkte Gewichtszunahme nicht so stark ins Gewicht. Von Vorteil ist es hierbei jedoch, dass das verbleibende Kunststoffmaterial das Verbundbauteil zusätzlich verstärkt und das Entfernen des Kunststoffmaterials entfällt, einhergehend mit einer vorteilhaften wesentlichen Reduzierung des Herstellungsaufwands.

Bevorzugt kann es auch sein, dass während des Schritts (d) und bevor das in das Innenvolumen eingespritzte Kunststoffmaterial zur Gänze ausgehärtet ist, das Innenvolumen von verbleibendem fließfähigen Kunststoffmaterial nur teilweise befreit wird, wobei besonders bevorzugt das Innenvolumen von verbleibendem fließfähigen Kunststoffmaterial erst befreit wird sobald sich an der das Innenvolumen begrenzenden Innenseite der Wandung des Profilhohlkörpers wenigstens bereichsweise wenigstens eine Schicht aus ausgehärtetem Kunststoffmaterial gebildet hat. Auf diese Weise wird besonders vorteilhaft eine den Profilhohlkörper und damit auch das Verbundbauteil verstärkende Schicht an der das Innenvolumen begrenzenden Innenseite der Wandung des Profilhohlkörpers ausgebildet, einhergehend mit der Schaffung eines besonders stabilen Verbundbauteils. Vorzugsweise wird das Innenvolumen von dem verbleibenden fließfähigen Kunststoffmaterial erst befreit sobald die Schicht eine minimale Dicke aufweist, die innerhalb eines Bereichs des halben bis zehnfachen der minimalen Wandstärke der Wandung liegt.

Das durch das erfindungsgemäße Verfahren herstellbare Verbundbauteil ist durch einen Profilhohlkörper verstärkt, wobei der Profilhohlkörper eine Wandung mit einer maximalen Wandstärke aufweist, die innerhalb eines Bereichs von 0,1 mm bis 3 mm, vorzugsweise 0,2 mm bis 2 mm, weiter vorzugsweise 0,3 mm bis 1 mm liegt.

Im Unterschied zu bekannten Verbundbauteilen weist der Profilhohlkörper eine Wandung mit einer maximalen Wandstärke auf, die wesentlich geringer ausgebildet ist als bei bekannten Lösungen, so dass das durch das erfindungsgemäße Verfahren herstellbare Verbundbauteil ein im Vergleich zu vergleichbaren bekannten Lösungen wesentlich geringeres Gewicht und ferner eine durch den Profilhohlkörper bewirkte hohe Steifigkeit und Festigkeit aufweist.

Das Verbundbauteil kann insbesondere eine Instrumententafel eines Kraftfahrzeugs oder ein Biegeträger für den Frontbereich oder den Heckbereich eines Kraftfahrzeugs sein. Das Verbundbauteil kann auch ein Frontendträger für ein Kraftfahrzeug oder ein Versteifungselement für die Heckklappe eines Kraftfahrzeugs oder eine A-Säule oder eine B-Säule der Karosserie eines Kraftfahrzeugs sein.

### Kurzbeschreibung der Zeichnungen

Nachfolgend werden zwei Ausführungsbeispiele der Erfindung anhand der beigefügten Zeichnungen näher erläutert. Es zeigt:
- Fig. 1: eine schematische Schnittdarstellung eines durch das erfindungsgemäße Verfahren hergestellten Verbundbauteils,
- Fig. 2: eine schematische Schnittdarstellung eines Profilhohlkörpers,
- Fig. 3: eine schematische Schnittdarstellung eines Spritzgusswerkzeugs mit einer Kavität zum Formen eines Verbundbauteils,
- Fig. 4: eine schematische Schnittansicht eines Endes eines Profilhohlkörpers mit einem an dem Ende angebrachten Stopfen,
- Fig. 5: eine schematische Schnittdarstellung eines zweiten Spritzgusswerkzeugs zur Veranschaulichung eines ersten Ausführungsbeispiels des erfindungsgemäßen Verfahrens, wobei das Spritzgusswerkzeug eine Kavität zum Formen eines Verbundbauteils aufweist, in welche ein Profilhohlkörper eingebracht ist, und
- Fig. 6, 7: weitere schematische Schnittdarstellungen des in Fig. 3 dargestellten Spritzgusswerkzeugs jeweils zusammen mit einem in der Kavität angeordneten Profilhohlkörper zur Veranschaulichung eines zweiten Ausführungsbeispiels des erfindungsgemäßen Verfahrens, und
- Fig. 8: eine schematische Schnittdarstellung eines dritten Spritzgusswerkzeugs zusammen mit einem in der Kavität angeordneten Profilhohlkörper zur Veranschaulichung eines dritten Ausführungsbeispiels des erfindungsgemä-βen Verfahrens, und
- Fig. 9: eine vergrößerte schematische Schnittdarstellung eines Abschnitts eines Profilhohlkörpers, der an der sein Innenvolumen begrenzenden Innenseite der Wandung eine Schicht aus ausgehärtetem Kunststoffmaterial aufweist.

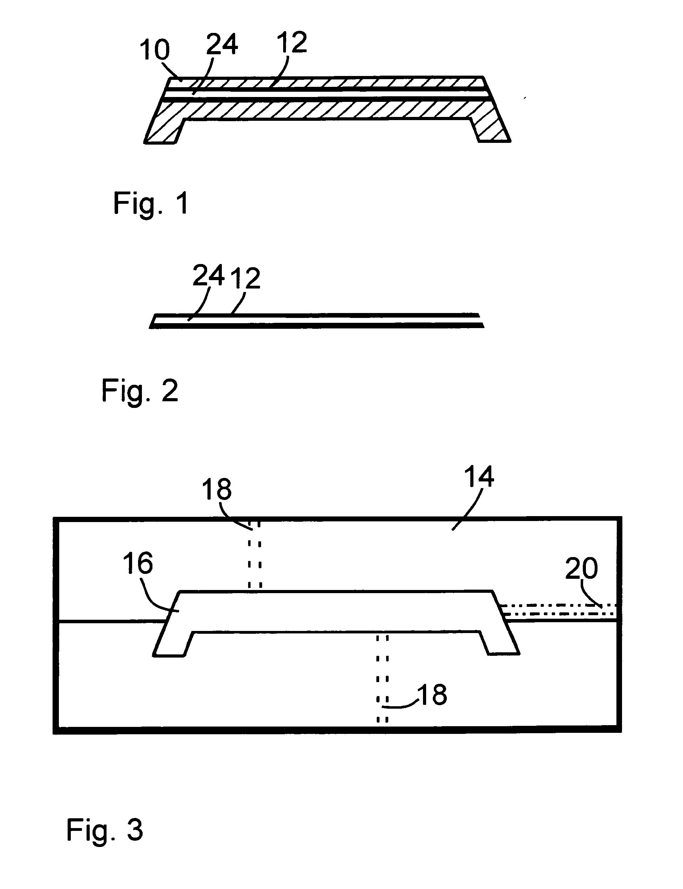

Das in Fig. 1 schematisch dargestellte, durch das erfindungsgemäße Verfahren hergestellte Verbundbauteil 10 ist in Form eines Biegeträgers 10 für ein Kraftfahrzeug ausgebildet und ist durch einen rohrförmigen Profilhohlkörper 12 (vgl. auch Fig. 2) aus einem metallischen Material verstärkt. Der Profilhohlkörper 12 weist als Hohlkörper ein geschlossenes Querschnittsprofil (hier nicht näher dargestellt) auf. Im Unterschied zu den Profilhohlkörpern bekannter Biegeträger kann der Profilhohlkörper 12 wesentlich dünnwandiger ausgebildet sein, da bei einer Herstellung dieses Verbundbauteils durch das erfindungsgemäße Verfahren eine Deformation oder Verformung des Profilhohlkörpers 12 wirksam vermieden wird. Die Wandstärke des Profilhohlkörpers dieses Ausführungsbeispiels liegt bei 0,5 mm. Typische Wandstärken des Profilhohlkörpers 12 liegen im Bereich von 0,1 mm bis 3 mm.

Die Fig. 3 zeigt eine schematische Schnittdarstellung eines Spritzgusswerkzeugs 14 mit einer Kavität 16 zum Formen eines Verbundbauteils in Form eines Biegeträgers. Das Spritzgusswerkzeug 14 weist zwei Einspritzkanäle 18 zum Einspritzen von fließfähigem Kunststoffmaterial und einen Zuführkanal 20 zum Zuführen von Wasser als Verstärkungsmedium auf.

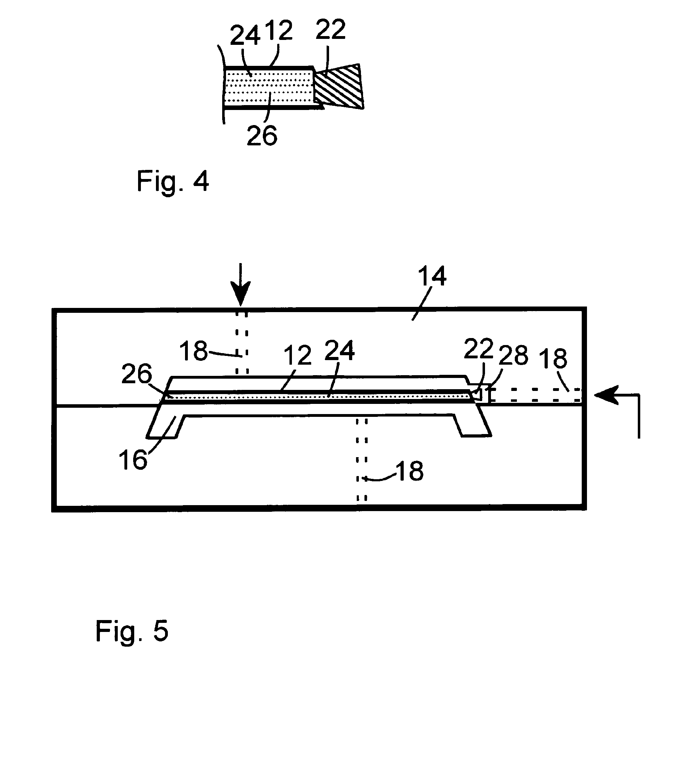

Die Fig. 4 zeigt eine schematische Schnittansicht eines Endes eines Profilhohlkörpers 12 mit einem an dem Ende angebrachten Stopfen 22. Die Fig. 5 zeigt eine schematische Schnittdarstellung eines zweiten Spritzgusswerkzeugs 14, wobei dieses Spritzgusswerkzeug 14 eine Kavität 16 zum Formen eines Verbundbauteils in Form eines Biegeträgers aufweist, in welche ein Profilhohlkörper 12 eingebracht ist. Fig. 4 und 5 dienen der Veranschaulichung eines ersten Ausführungsbeispiels des erfindungsgemäßen Verfahrens bei dem unter anderem vor Schritt (b) - also vor dem Einbringen des Profihohlkörpers 12 in die Kavität 16 des Spritzgusswerkzeugs 14 - das Innenvolumen 24 des Profilhohlkörpers 12 mit Wasser 26 (in den Figuren durch Punkte veranschaulicht) als Verstärkungsmedium aufgefüllt und das Innenvolumen 24 anschließend verschlossen wird. Das Wasser 26 kann hierbei von einer Befüllstation (nicht dargestellt) zugeführt werden.

Wie Fig. 4 veranschaulicht erfolgt das Verschließen mit dem Stopfen 22, der das einzige offene Ende des rohrförmigen Profilhohlkörpers 12 verschließt. Fig. 5 veranschaulicht die Situation nach dem Einbringen des mit Wasser 26 aufgefüllten und durch den Stopfen 22 verschlossenen Profilhohlkörpers 12 in die Kavität 16 des Spritzgusswerkzeugs 14 und während des Formens des Biegeträgers durch Einspritzen von fließfähigem Kunststoffmaterial in die Kavität 16 über drei Einspritzkanäle 18 (symbolisch durch die drei Pfeile veranschaulicht).

Im Unterschied zu dem in Fig. 3 dargestellten Spritzgusswerkzeug 14 weist die Kavität 16 des in Fig. 5 dargestellten Spritzgusswerkzeugs 14 einen weiteren Kavitätsbereich 28 zum Anordnen des Stopfens 22 auf, welcher gemäß dem hier veranschaulichten ersten Ausführungsbeispiel des erfindungsgemäßen Verfahrens von dem fließfähigen Kunststoffmaterial überspritzt bzw. angespritzt wird. Über den Stopfen 22 ist ein sich beim Einspritzen des Kunststoffmaterials in der Kavität 16 aufbauender Druck auf das Wasser 26 im Innenvolumen 24 übertragbar, um ggf. trotz sorgfältigen Auffüllens des lnnenvolumens 24 mit dem Wasser 26 noch bestehende kompressible Lufteinschlüsse bzw. Luftblasen durch die Druckübertagung in ihrer Größe zu reduzieren, so dass von diesen keine oder keine wesentliche deformierende oder verformende Wirkung auf den Profilhohlkörper 12 während des Formens gemäß dem erfindungsgemäßen Schritt (c) ausgehen kann. Nach dem Aushärten des Kunststoffmaterials und nach dem Entnehmen des Biegeträgers aus dem Spritzgusswerkzeug 14 wird das Wasser 26 aus dem Innenvolumen 24 nach Entfernen des Stopfens 22 entfernt.

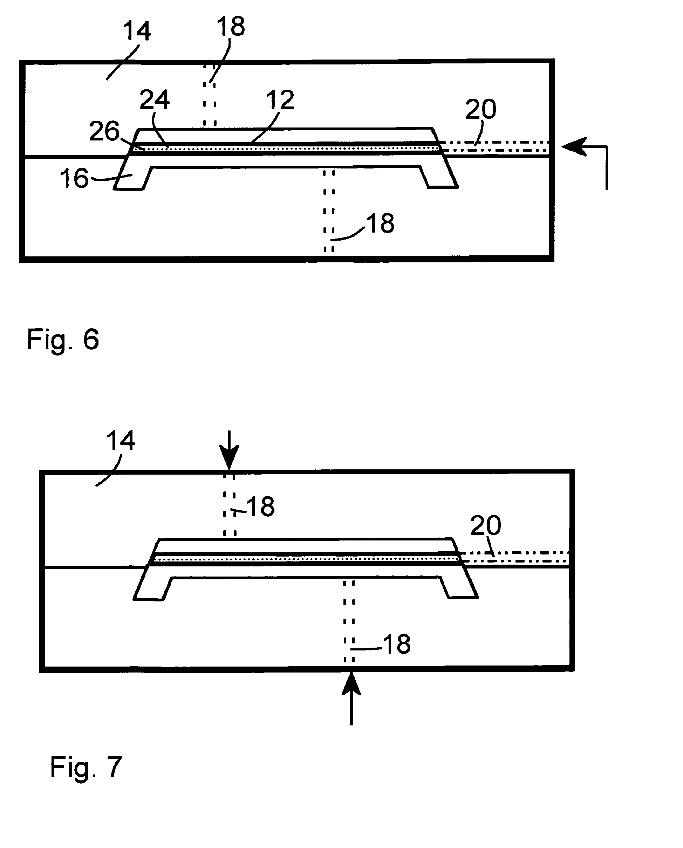

Die Fig. 6 und 7 zeigen weitere schematische Schnittdarstellungen des in Fig. 3 dargestellten Spritzgusswerkzeugs 14 jeweils zusammen mit einem in der Kavität 16 angeordneten Profilhohlkörper 12 zur Veranschaulichung eines zweiten Ausführungsbeispiels des erfindungsgemäßen Verfahrens. Gemäß diesem zweiten Ausführungsbeispiel wird nach dem Einbringen des Profilhohlkörpers 12 in die Kavität 16, und vor dem Formen des Biegeträgers durch Einspritzen von Kunststoffmaterial, das Innenvolumen 24 des Profilhohlkörpers 12 über den Zuführkanal 20 mit Wasser 26 aufgefüllt, wie in Fig. 6 veranschaulicht, in der das Auffüllen des Innenvolumens 24 mit Wasser 26 durch einen Pfeil veranschaulicht ist. Die Pfeile der Fig. 7 veranschaulichen das Formen des Biegeträgers durch Einspritzen von fließfähigem Kunststoffmaterial in die Kavität 16 über die zwei Einspritzkanäle 18. Nach dem Formen des Biegeträgers erfolgt das Aushärten des eingespritzten Kunststoffmaterials und das Wasser 26 wird nach dem Aushärten durch Einbringen von Pressluft aus dem Innenvolumen 24 entfernt.

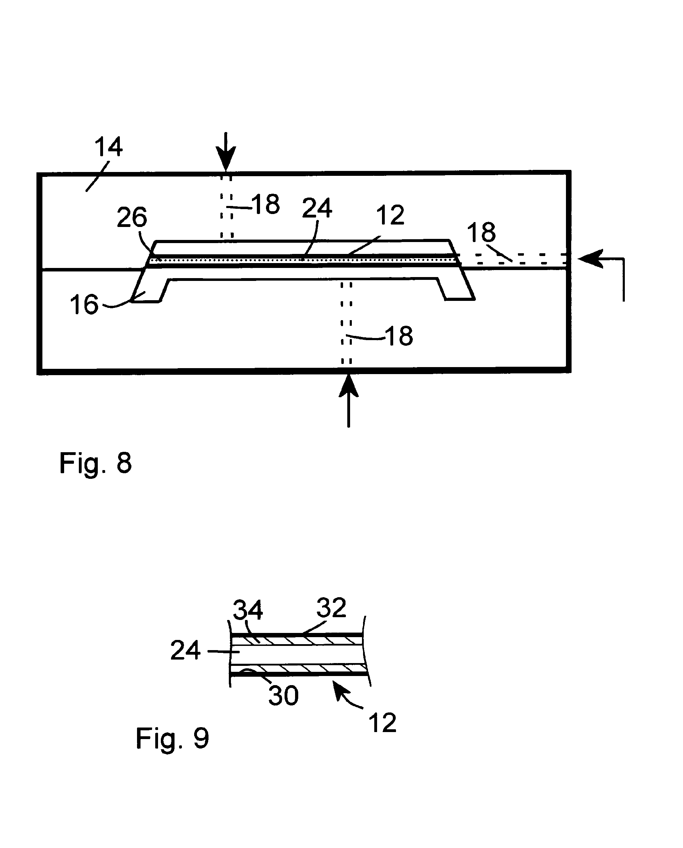

Die Fig. 8 zeigt eine schematische Schnittdarstellung eines dritten Spritzgusswerkzeugs 14 zusammen mit einem in der Kavität 16 angeordneten Profilhohlkörper 12 zur Veranschaulichung eines dritten Ausführungsbeispiels des erfindungsgemäßen Verfahrens, wobei das in Fig. 8 dargestellte Spritzgusswerkzeug 14 drei Einspritzkanäle 18 aufweist. Gemäß dem dritten Ausführungsbeispiel wird als Verstärkungsmedium 26 ein Teil des eingespritzten Kunststoffmaterials verwendet, wobei das Innenvolumen 24 des Profilhohlkörpers 12 mit diesem Kunststoffmaterial 26 während des Einspritzens des Kunststoffmaterials in die Kavität 16 - also während des Formens des Biegträgers - vollgespritzt wird. Das Formen des Biegeträgers, das zeitgleich bzw. im wesentlichen zeitgleich zum Vollspritzen des Innenvolumens 24 erfolgt, ist durch entsprechende Pfeile (in Fig. 8 oben und unten dargestellt) veranschaulicht, die ein Einspritzen von Kunststoffmaterial in die Kavität 16 über zwei der drei Einspritzkanäle 18 veranschaulichen. Der rechte äußere Pfeil veranschaulicht das Vollspritzen des Innenvolumens 24 über den dritten Einspritzkanal 18.

Das Innenvolumen 24 wird gemäß diesem dritten Ausführungsbeispiel während des Aushärtens gemäß dem erfindungsgemäßen Schritt (d) und bevor das in das Innenvolume 24 eingespritzte Verstärkungsmedium 26 in Form des Kunststoffmaterials zur Gänze ausgehärtet ist von verbleibendem fließfähigen Kunststoffmaterial teilweise befreit, so dass, wie Fig. 9 veranschaulicht, nach diesem Befreien bzw. Entfernen des verbleibenden fließfähigen Kunststoffmaterials an der das Innenvolumen 24 begrenzenden Innenseite 30 der Wandung 32 des Profilhohlkörpers 12 eine Schicht 34 aus ausgehärtetem Kunststoffmaterial verbleibt. Die Ausbildung einer derartigen Schicht 34 ist deshalb möglich, weil beim Aushärten bzw. Abkühlen innere Bereiche des in das Innenvolumen 24 eingespritzten Kunststoffmaterials langsamer abkühlen bzw. aushärten als äußere Bereiche des in das Innenvolumen 24 eingespritzten Kunststoffmaterials. Das Innenvolumen 24 des Profilhohlkörpers 12 wird von dem verbleibenden fließfähigen Kunststoffmaterial innerhalb des Innenvolumens 24 somit erst befreit, sobald die Schicht 34 eine minimale Dicke aufweist, die insbesondere innerhalb eines Bereichs des halben bis zehnfachen der minimalen Wandstärke der Wandung 32 liegen kann.

## Patentansprüche

1. Verfahren zur Herstellung eines Verbundbauteils (10), das durch einen Profilhohlkörper (12) verstärkt ist, wobei das Verfahren die folgenden Schritte umfasst:
(a) Bereitstellen eines Profilhohlkörpers (12),
(b) Einbringen des Profilhohlkörpers (12) in eine Kavität (16) eines Spritzgusswerkzeugs (14),
(c) Formen des Verbundbauteils (10) durch Einspritzen von Kunststoffmaterial in die Kavität (16), wobei der Profilhohlkörper (12) während des Einspritzens durch ein Verstärkungsmedium (26) im Innenvolumen (24) des Profihohlkörpers (12) gestützt wird, und
(d) Aushärten des eingespritzten Kunststoffmaterials.

2. Verfahren nach Anspruch 1, **dadurch gekennzeichnet, dass** als Verstärkungsmedium (26) ein inkompressibles Fluid, vorzugsweise Wasser verwendet wird.

3. Verfahren nach Anspruch 1 oder 2, **dadurch gekennzeichnet, dass** vor Schritt (b) das Innenvolumen (24) des Profilhohlkörpers (12) mit dem Verstärkungsmedium (26) aufgefüllt und das Innenvolumen (24) anschließend verschlossen wird, und dass das Verstärkungsmedium (26) nach Schritt (d) aus dem Innenvolumen (24) entfernt wird.

4. Verfahren nach Anspruch 3, **dadurch gekennzeichnet, dass** das Innenvolumen (24) durch wenigstens einen Stopfen (22) verschlossen wird, und dass der Profilhohlkörper (12) in Schritt (b) mit dem Stopfen (22) in die Kavität (16) eingebracht wird, wobei über den Stopfen (22) ein sich beim Einspritzen des Kunststoffmaterials in der Kavität (16) aufbauender Druck auf das Verstärkungsmedium (26) im Innenvolumen (24) übertragbar ist.

5. Verfahren nach einem der Anspruch 1 oder 2, **dadurch gekennzeichnet, dass** nach Schritt (b) und vor Schritt (c) das Innenvolumen (24) des Profilhohlkörpers (12) mit dem Verstärkungsmedium (26) aufgefüllt wird, und dass das Verstärkungsmedium (26) nach Schritt (d) aus dem Innenvolumen (24) entfernt wird.

6. Verfahren nach einem der Ansprüche 3 bis 5, **dadurch gekennzeichnet, dass** das Verstärkungsmedium (26) durch Einbringen von Luft aus dem Innenvolumen (24) verdrängt wird.

7. Verfahren nach Anspruch 1, **dadurch gekennzeichnet, dass** als Verstärkungsmedium (26) ein Teil des eingespritzten Kunststoffmaterials verwendet wird, wobei das Innenvolumen (24) des Profilhohlkörpers (12) mit diesem Kunststoffmaterial während des Formens des Verbundbauteils (10) in Schritt (c) vollgespritzt wird.

8. Verfahren nach Anspruch 7, **dadurch gekennzeichnet, dass** das in das Innenvolumen (24) eingespritzte Kunststoffmaterial nach Schritt (c) aus dem Innenvolumen (24) entfernt wird.

9. Verfahren nach Anspruch 7, **dadurch gekennzeichnet, dass** das in das Innenvolumen (24) eingespritzte Kunststoffmaterial in dem Innenvolumen (24) verbleibt und ausgehärtet wird.

10. Verfahren nach Anspruch 8, **dadurch gekennzeichnet, dass** während des Schritts (d) und bevor das in das Innenvolumen (24) eingespritzte Kunststoffmaterial zur Gänze ausgehärtet ist, das Innenvolumen (24) von verbleibendem fließfähigen Kunststoffmaterial teilweise befreit wird.

11. Verfahren nach Anspruch 10, **dadurch gekennzeichnet, dass** das Innenvolumen (24) von verbleibendem fließfähigen Kunststoffmaterial erst befreit wird sobald sich an der das Innenvolumen (24) begrenzenden Innenseite (30) der Wandung (32) des Profilhohlkörpers (12) wenigstens bereichsweise wenigstens eine Schicht (34) aus ausgehärtetem Kunststoffmaterial gebildet hat.

12. Verfahren nach einem der Ansprüche 1 bis 11, **dadurch gekennzeichnet, dass** das Verbundbauteil (10) eine Instrumententafel eines Kraftfahrzeugs oder ein Biegeträger für den Frontbereich oder den Heckbereich eines Kraftfahrzeugs oder ein Frontendträger für ein Kraftfahrzeug oder ein Versteifungselement für die Heckklappe eines Kraftfahrzeugs oder eine A-Säule oder eine B-Säule der Karosserie eines Kraftfahrzeugs ist.

13. Verbundbauteil (10), wobei das Verbundbauteil (10) durch einen Profilhohlkörpe (12) verstärkt ist und nach einem Verfahren der Ansprüche 1 bis 12 herstellbar ist, und wobei der Profilhohlkörper (12) eine Wandung (32) mit einer maximalen Wandstärke aufweist, die innerhalb eines Bereichs von 0,1 mm bis 3 mm, vorzugsweise 0,2 mm bis 2 mm, weiter vorzugsweise 0,3 mm bis 1 mm liegt.
